# EUROPÄISCHE PATENTSCHRIFT

(11) **EP 2 527 811 B1**
(45) Veröffentlichungstag und Bekanntmachung des Hinweises auf die Patenterteilung: **06.12.2017**
(21) Anmeldenummer: 12181721.7
(22) Anmeldetag: 24.07.2003
(51) Int. Cl.: G01D 5/347, G01M 1/04, G01M 1/06, B23Q 17/12

(54) **UNWUCHT-MESSVORRICHTUNG**
UNBALANCE MEASURING DEVICE
DISPOSITIF DE MESURE DE BALOURD

(30) Priorität: 25.07.2002 DE 10233917
(43) Veröffentlichungstag der Anmeldung: 28.11.2012
(62) Teilanmeldung aus: 03771099.3
(73) Patentinhaber: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Weickmann & Weickmann PartmbB

(56) Entgegenhaltungen:
- EP-A1- 0 108 950
- EP-A1- 0 388 584
- DE-A1- 2 639 268
- DE-A1- 2 700 098
- DE-A1- 3 109 586
- JP-A- S5 647 709
- US-A1- 2001 007 208

## Beschreibung

Die Erfindung betrifft eine Vorrichtung zum Messen der Rotationsunwucht eines Gegenstands, beispielsweise eines Maschinenelements oder eines Werkzeughalters.

Die Spindel moderner rotierender Werkzeugmaschinen, beispielsweise Bohr- oder Fräsmaschinen, arbeiten mit sehr hohen Drehzahlen von 20.000 U/min. und darüber. Bei diesen Drehzahlen treten bereits bei geringer Unwucht hohe Fliehkräfte auf, die nicht nur die Spindellager der Werkzeugmaschine belasten, sondern auch die Standzeit des Werkzeugs wie auch das Bearbeitungsergebnis verschlechtern. Der Werkzeughalter wird deshalb üblicherweise auf Auswuchtmaschinen, wie sie beispielsweise aus WO 00/45 983 bekannt sind, mit oder ohne eingesetztem Werkzeug vor dem Einsatz in der Werkzeugmaschine ausgewuchtet.

Um die Unwucht des auszuwuchtenden Gegenstands nach Größe und Richtung hinreichend genau messen zu können, werden an die Unwuchtfreiheit und an die Justierung der Auswuchtmaschine höchste Anforderungen gestellt, nachdem eine Eigenunwucht der Auswuchtmaschine das Messergebnis verfälschen würde. Wege, die Eigenunwucht der Auswuchtmaschine in hohem Maße zu verringern, werden in WO 00/45 983 beschrieben.

Während bei der Herstellung der Auswuchtmaschine hohe Präzision gewährleistet werden kann, lässt sich ein entsprechender Genauigkeitsgrad bei einer Reparatur "vor Ort" bei herkömmlichen Maschinen nicht erreichen. Eine Rücksendung der Auswuchtmaschine zur werkseitigen exakten Justierung ist hingegen angesichts des üblicherweise hohen Gesamtgewichts der Maschine mit hohem Aufwand verbunden.

US2001/0007208, DE2700098 und DE2639268 offenbaren Unwuchtmessvorrichtungen, die eine Winkelmesseinrichtung aufweisen.

Die Erfindung geht aus von einer Vorrichtung zum Messen der Rotationsunwucht eines Gegenstands, umfassend:
- eine Spindeleinheit mit einem Spindelhalter und einer an dem Spindelhalter um eine Drehachse drehbar gelagerten, an einem ihrer beiden Enden eine Kupplung zur Befestigung des Gegenstands tragenden Spindel;
- eine den Spindelhalter in einer vorbestimmten Messrichtung für Unwuchtkräfte auslenkbar, quer zur vorbestimmten Messrichtung für Unwuchtkräfte vorzugsweise jedoch steif führende Halteraufhängung zur Befestigung der Spindeleinheit an einer Maschinenbasis;
- einen die Spindel rotierend antreibenden Elektromotor und
- eine bei Rotation der Spindel die Unwuchtkraft in der vorbestimmten Messrichtung messende Sensoranordnung.
Erfindungsgemäß ist vorgesehen, dass an einem der axialen Enden der Spindel, insbesondere an dem die Befestigungskupplung für den Gegenstand tragenden Ende ein Ringflächenelement befestigt ist, dessen Umfang mit einem magnetischen oder optischen Informationsträger in Form eines Bandabschnitts sowohl für eine den Drehwinkel repräsentierende Information als auch für eine die Null-Punkt-Drehstellung repräsentierende Information versehen ist und dass mit dem Spindelhalter eine Lesekopfanordnung zum Lesen dieser Informationen verbunden ist. Auf diese Weise trägt die Spindel unmittelbar die Informationen sowohl für die Drehrichtung als auch die Null-Punkt-Drehstellung, was sich auf die Erfassungsgenauigkeit auswirkt und diese Informationen werden mittels einer einzigen Lesekopfbaugruppe erfasst, was die Montage erleichtert.

Bei dem Informationsträger kann es sich beispielsweise um eine Beschichtung aus magnetisierbarem Material handeln, wie sie bei Magnetbändern üblich ist; es kann aber auch unmittelbar ein Magnetband oder ein Band mit optischen Informationen, z.B. in Form einer Strichskala, auf den Umfang des z.B. zylindrischen Ringflächenelements aufgeklebt sein. Bevorzugt trägt der Informationsträger zwei Informationsspuren axial nebeneinander, die die Lesekopfanordnung voneinander gesondert abtastet. Die beiden Informationen können aber auch in einer gemeinsamen Spur aufgezeichnet sein und sich durch ihren Informationsinhalt, elektronisch trennbar, voneinander unterscheiden.

Soweit es sich bei dem Informationsträger um einen auf den Umfang des Ringflächenelements aufgeklebten Magnetbandabschnitt handelt, kann der Magnetbandabschnitt vor dem Aufkleben mit periodischen, die Drehwinkeleinteilung repräsentierenden Magnetisierungsimpulsen versehen sein. Diese Vormagnetisierung des Magnetbandabschnitts vor dem Aufbringen hat jedoch den Nachteil, dass eine evtl. Dehnung des Magnetbandabschnitts beim Aufkleben zu späteren Messfehlern führt. Zu weiteren Messfehlern kann es im Bereich der Stoßstelle der beiden aneinanderstoßenden Enden des Magnetbandabschnitts kommen. Messfehler im Bereich der Stoßstelle können vermieden werden, wenn die aneinanderstoßenden Enden des Magnetbandabschnitts in der Bandebene schräg geschnitten sind, die Stoßstelle sich also über einen vergleichsweise großen Umfangsabschnitt hinweg erstreckt. Wird in einem solchen Fall die Drehwinkelinformation und ggf. die Null-Punkt-Drehstellungsinformation nach dem Aufkleben des Magnetbandabschnitts auf diesen geschrieben, so lässt sich eine sehr hohe Winkelgenauigkeit der Messung erreichen und zwar auch im Bereich des Schrägschnittstoßes.

Der optische Informationsträger kann im Auflicht, d.h. reflektierend, gelesen werden. Störungsfreier arbeiten optische Sensoren jedoch im Durchlicht in Verbindung mit einem im Durchlicht abtastbaren optischen Informationsträger, der beispielsweise die Form einer durchleuchtbaren Ringscheibe haben kann.

Bevorzugt hat das Ringflächenelement auf seiner der Spindel abgewandten Fläche optische Winkelgradmarken als Hilfe für die manuelle Ausrichtung der Spindel beim Anbringen von Unwuchtausgleichsgewichten oder Ausgleichsaussparungen.

Im Folgenden werden Ausführungsbeispiele der Erfindung anhand einer Zeichnung näher erläutert. Hierbei zeigt:
Fig. 1 einen Axiallängsschnitt durch eine Auswuchtmaschine für Werkzeughalter, gesehen entlang einer Linie I-I in Fig. 2;
Fig. 2 einen Axialquerschnitt durch die Auswuchtmaschine, gesehen entlang einer Linie II-II in Fig. 1;
Fig. 3 eine Schnittansicht der Auswuchtmaschine, gesehen entlang einer Linie III-III in Fig. 2;
Fig. 4 eine schematische Draufsicht auf eine Schwalbenschwanzführung der Auswuchtmaschine;
Fig. 5 eine Teildarstellung eines Informationsträgerrings;
Fig. 6 eine Teildarstellung einer Variante des Informationsträgerrings und
Fig. 7 eine Teildarstellung einer Variante der Auswuchtmaschine.

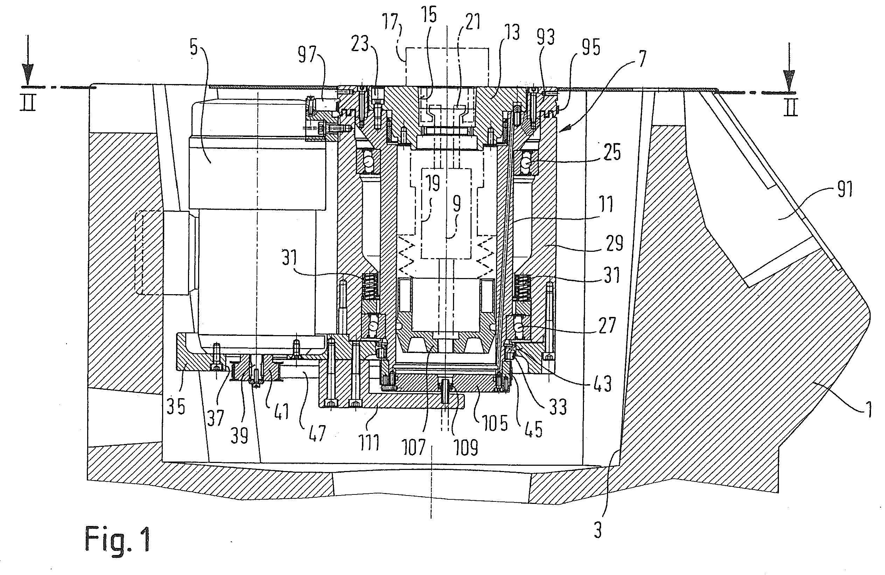

Die in den Fig. 1 bis 3 dargestellte Auswuchtmaschine hat ein als Maschinenbasis dienendes, der Standsicherheit wegen aus einem schweren Material, beispielsweise Beton oder dgl., gegossenes Gehäuse 1, das in einer von oben zugänglichen Kammer 3 eine von einem Elektromotor 5 angetriebene Spindeleinheit 7 enthält. Die Spindeleinheit 7 hat eine hier mit vertikaler Drehachse 9 angeordnete rotierende Spindel 11, die an ihrem oberen Ende einen betriebsmäßig auswechselbaren Kupplungsadapter 13 mit einer zur Drehachse 9 zentrischen Aufnahmeöffnung 15 für den Anschluss eines auszuwuchtenden, genormten, bei 17 angedeuteten Werkzeughalters aufweist. Bei dem Werkzeughalter kann es sich um einen herkömmlichen Steilkegel-Werkzeughalter oder auch um einen Hohlschaftkegel-Halter (HSK-Halter) handeln. Die Spindel 11 ist als Hohlspindel ausgebildet und enthält eine nachfolgend noch näher erläuterte Betätigungseinrichtung 19, die mit Hilfe einer Spannzange 21 den Werkzeughalter 17 während der Unwuchtmessung in dem Kupplungsadapter 13 hält. Der Kupplungsadapter 13 ist mit Schrauben 23 an der Spindel 11 befestigt und entsprechend dem Typ des Werkzeughalters austauschbar.

Die Spindel 11 ist mit zwei in axialem Abstand voneinander angeordneten Kugellagern 25, 27 in einem rohrzylindrischen Spindelhalter 29 spielfrei gelagert, wobei axiales Lagerspiel durch Vorspannfedern 31 sowie eine die Spindel 11 umschließende Federmutter 33 ausgeglichen wird.

Der Elektromotor 5 ist achsparallel zur Drehachse 9 neben der Spindeleinheit 7 angeordnet und zusammen mit dem Spindelhalter 29 auf derselben Seite eines im Wesentlichen plattenförmigen Verbindungsjochs 35 angeflanscht. Das Verbindungsjoch 35 hat eine Durchtrittsöffnung 37 für ein auf einer Welle 39 des Elektromotors 5 drehfest sitzendes Riemenrad 41 sowie eine weitere Durchtrittsöffnung 43 für die Spindel 11, die an ihrem dem Kupplungsadapter 13 abgewandten Ende ein weiteres Riemenrad 45 trägt. Ein Endlosriemen-Antrieb 47 stellt die Antriebsverbindung zwischen den Riemenrädern 41, 45 und damit zwischen dem Elektromotor 5 und der Spindel 11 her. Da der Antriebsriemen 47 nahe dem Verbindungsjoch 35 verläuft, ist die Antriebsverbindung vergleichsweise steif. Da, wie nachfolgend noch erläutert wird, die Winkelbestimmung des zu messenden Unwuchtvektors unmittelbar an der Spindel 11 erfolgt und nicht wie bei herkömmlichen Unwuchtmessvorrichtungen am Elektromotor, kann der Antriebsriemen in gewissem Umfang auch schlüpfen. Es muss also kein aufwendiger schlupffreier Zahnriemen benutzt werden.

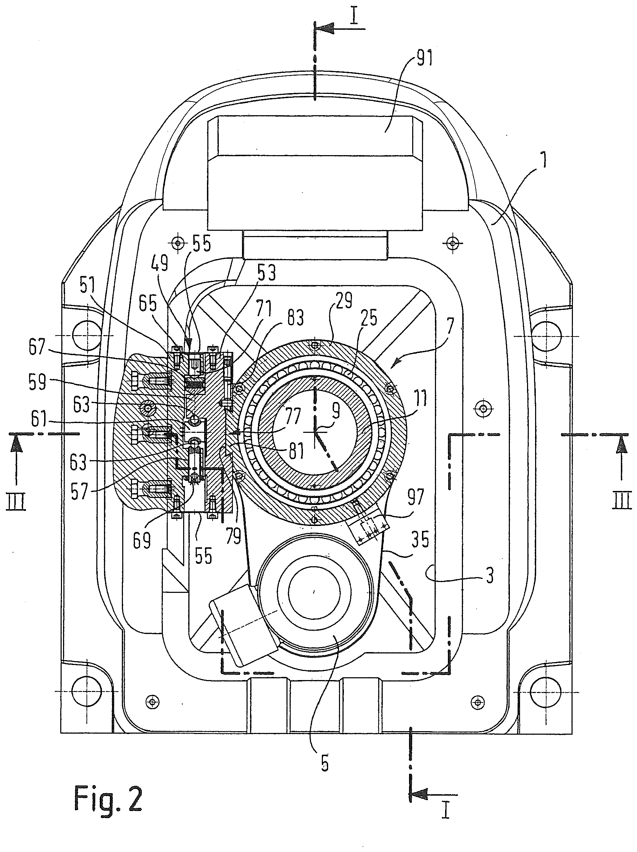

Die aus dem Elektromotor 5 und der Spindeleinheit 7 bestehende Baugruppe ist mittels einer lösbar am Spindelhalter 29 befestigten Halteraufnahme 49 am Gehäuse 1 gehalten. Die Halteraufnahme 49 umfasst zwei im Wesentlichen plattenförmige Halterelemente 51, 53, die über mehrere Blattfederelemente 55 (Figur 2) im Abstand voneinander angeordnet und aneinander befestigt sind. Die Blattfederelemente 55 verlaufen in zueinander und zur Drehachse 9 parallelen Ebenen, so dass die Blattfederelemente 55 in Abstandrichtung der Halterelemente 51, 53 wie auch in vertikaler Richtung steif sind, während die Halterelemente 51, 53 in horizontaler Richtung durch Unwucht-Fliehkräfte geringfügig auslenkbar sind. Benachbart dem oberen Ende der Spindel 11 einerseits und benachbart dem unteren Ende der Spindel 11 andererseits sind zwischen paarweise von den Halterelementen 51, 53 auf das jeweils andere Halterelement zu abstehenden Vorsprüngen 57, 59 der Halterelemente 51, 53 je einer von zwei Kraftsensoren 61 eingespannt, die die von der Spindeleinheit 7 in horizontaler Messrichtung über die Halterelemente 51, 53 auf die am oberen Ende und am unteren Ende der Spindeleinheit 7 ausgeübten Unwuchtkräfte messen. Die Kraftsensoren 61 liegen zur Vermeidung von Querkräften über Auflagekugeln 63 gelenkig an den zugeordneten Vorsprüngen 57, 59 an. An einem der Halterelemente, in der Fig. 2 dargestellt dem Halterelement 51, ist zusätzlich zum Vorsprung 57 ein weiterer Vorsprung 65 vorgesehen, zwischen die der Vorsprung 59 des anderen Halterelements 53 greift. Zwischen die Vorsprünge 65 und 59 ist ein elastisches Vorspannelement 67 eingespannt, welches für eine gewisse Vorspannung des Kraftsensors 61 sorgt. In der Messrichtung sich gegenüberliegende Einstellschrauben 69, 71 in den Vorsprüngen 57 bzw. 65 erlauben eine Positionsjustierung des Kraftsensors 61 und eine Justierung der Vorspannkraft des Vorspannelements 67. Jeder der beiden Kraftsensoren 61 und das ihm zugeordnete federnde Vorspannelement sind in Serie zueinander an einem der beiden Halterelemente vorgespannt abgestützt, während das andere Halterelement im Kraftweg zwischen dem Kraftsensor 61 und dem Vorspannelement 67 an dem Kraftsensor 61 abgestützt ist. Auf diese Weise ist sichergestellt, dass der Reaktionskraftweg des Vorspannelements 67 sich unmittelbar über ein einzelnes der Halterelemente schließt und die Blattfederelemente 55 nicht belastet werden. Die Blattfederelemente 55 sind paarweise den Kraftsensoren 61 zugeordnet und liegen sich gleichfalls paarweise in Messrichtung gegenüber. Schließlich sind auch die Vorspannelemente 67 zur Vermeidung von Querkräften zwischen Spitzen gelenkig gelagert, wie dies beispielsweise Fig. 2 zeigt.

Die am oberen und am unteren Ende der Spindeleinheit 7 im Abstand voneinander angeordneten Kraftsensoren 61 sind bezogen auf eine zur Kraftrichtung senkrechte Axiallängsebene der Spindel 11 an den beiden Halterelementen 51, 53 gespiegelt abgestützt. Wie Fig. 2 für den oberen Kraftsensor 61 zeigt, stützt sich dieser bezogen auf die Drehachse 9 im Uhrzeigersinn gesehen an dem Vorsprung 59 des spindelseitigen Halterelements 53 und gegen den Uhrzeigersinn gesehen am Vorsprung 57 des gehäuseseitigen Halterelements 51 ab. Der untere Kraftsensor 61 hingegen ist im Uhrzeigersinn gesehen am gehäuseseitigen Halterelement 51 und gegen den Uhrzeigersinn gesehen am spindelseitigen Halterelement 53 abgestützt. Dementsprechend schließt sich der Reaktionskraftweg des dem unteren Kraftsensor 61 zugeordneten Vorspannelements 67 über das spindelseitige Halterelement 53. Es versteht sich, dass die Abstützweise des unteren und des oberen Kraftsensors 61 vertauscht sein kann. Vorteil dieser Anordnungsweise ist, dass bei einer Kippbewegung der Spindel 11 beide Kraftsensoren 61 gleichsinnig entweder druckbelastet oder druckentlastet werden. Kraftrichtungsabhängige Kennlinienunterschiede der Kraftsensoren beeinflussen dementsprechend das Messergebnis nicht. Es versteht sich, dass die Vorspannelemente 67 der beiden Kraftsensoren 61 gleichfalls auf gegenüberliegenden Seiten der genannten Axiallängsschnittebene angeordnet sind.

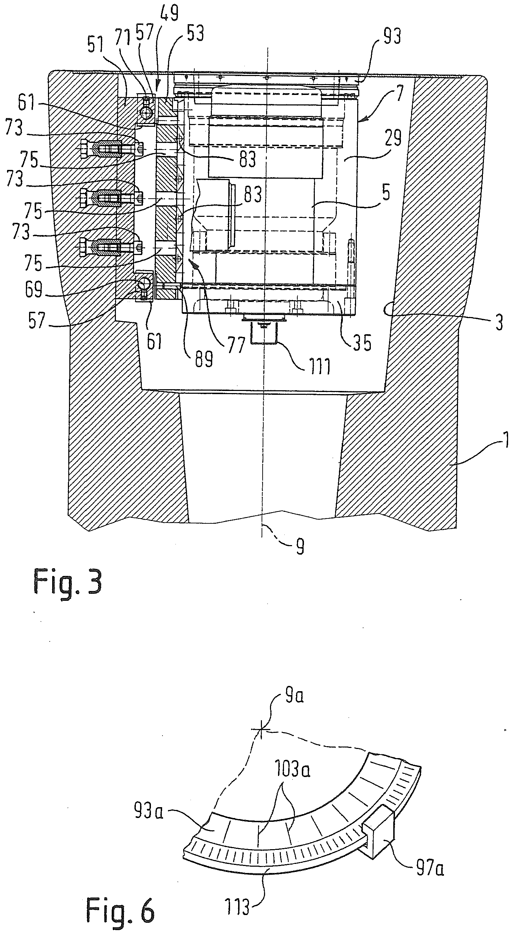

Ebenso wie die Spindeleinheit 7 und der Elektromotor 5 zu einer für sich vormontierten Baugruppe zusammengefasst sind, ist auch die Halteraufnahme 49 mit den zwischen den Halterelementen 51, 53 angeordneten Kraftsensoren 61 zu einer zweiten vormontierten Baugruppe vereinigt, die als vormontierte Baugruppe an dem Gehäuse 1 befestigt ist. Das Halterelement 51 ist hierzu mittels Schrauben 73, die über Löcher 75 in dem Halterelement 53 hindurch zugänglich sind, an dem Gehäuse 1 angeschraubt (Figur 3).

Die aus der Spindeleinheit 7 und dem Elektromotor 5 bestehende Baugruppe ist ihrerseits mittels einer allgemein mit 77 bezeichneten Schwalbenschwanzführung indexiert, d.h. in einer vorbestimmten Position relativ zu der Halteraufhängung 49 an deren gehäusefernen Halterelement 53 lösbar befestigt. Die Schwalbenschwanzführung 77 hat an dem Halterelement 53 eine achsparallel zur Drehachse 9 sich erstreckende Schwalbenschwanznut 79, in der ein Schwalbenschwanzkeil 81 längsverschiebbar geführt ist. Der Schwalbenschwanzkeil 81 ist mit Hilfe mehrerer in Längsrichtung der Schwalbenschwanzführung 77 verteilter und quer zur Längsrichtung einstellbarer Klemmschrauben 83 fixierbar.

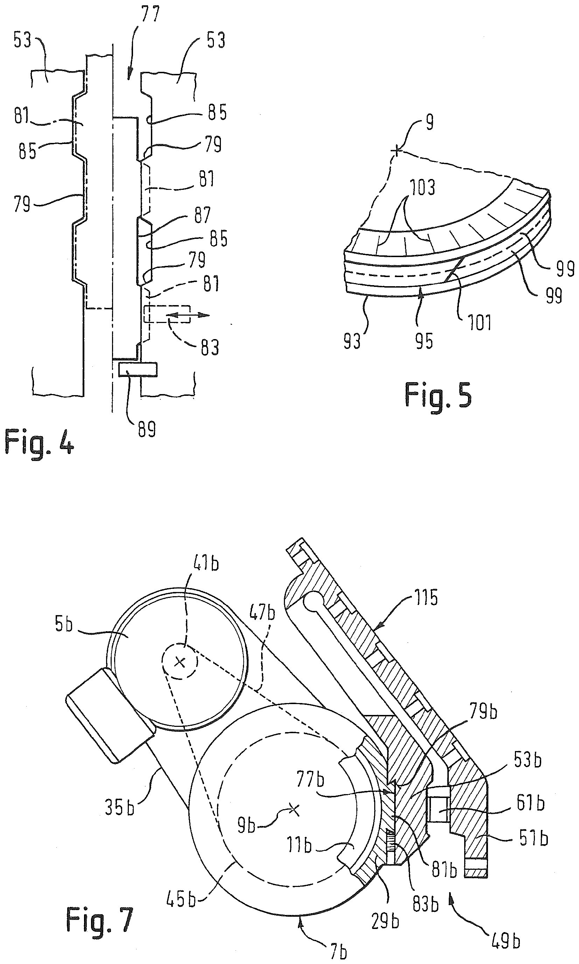

Wie Figur 4 zeigt, haben sowohl die Schwalbenschwanznut 79 als auch der Schwalbenschwanzkeil 81 mehrere Bajonettaussparungen 85 bzw. 87, die die Schwalbenschwanznut 79 und den Schwalbenschwanzkeil 81 in Längsrichtung segmentieren. Figur 4 zeigt in ihrer rechten Hälfte die Schwalbenschwanzführung 77 in ihrer indexierten Endposition, in welcher ein an dem Halterelement 53 vorgesehener Anschlagstift 89 die Endposition der Spindeleinheit 7 relativ zur Halteraufhängung 49 in Verschieberichtung der Schwalbenschwanzführung 77 festlegt. Die Segmente des Schwalbenschwanzkeils 81 überlappen hierbei die Segmente der Schwalbenschwanznut 79. Die Bajonettaussparungen 85, 87 erlauben das Anfügen der Spindeleinheit 7 quer zur Verschieberichtung der Schwalbenschwanzführung 77 nahe ihrer Endposition, da, wie Figur 4 in ihrer linken Hälfte zeigt, die Bajonettaussparungen 85, 87 Durchbrechungen für die Segmente der Bajonettnut 79 bzw. des Bajonettkeils 81 bilden. Die Segmentierung der Schwalbenschwanzführung 77 erleichtert die Montage erheblich.

Der über die Spindeleinheit 7 an der Halteraufnahme 49 hängende Elektromotor 5 übt auf die Kraftsensoren 61 ein Kragmoment aus, welches von evtl. Unwuchtschwingungen des Elektromotors 5 moduliert wird. Der sich daraus ergebende Messfehler kann gemindert werden, wenn der Momentenarm des Kragmoments soweit als möglich verringert wird, der Elektromotor 5 also möglichst nahe an die durch die Kraftmessrichtung der Kraftsensoren 61 verlaufende Vertikalebene angenähert wird. Wie beispielsweise Fig. 2 zeigt, ist hierzu die die Drehachsen 9 der Spindel 11 und die nicht näher bezeichnete Drehachse des Elektromotors 5 enthaltende Ebene so angeordnet, dass sie quer zu einer senkrecht zur Kraftmessrichtung verlaufenden Axiallängsschnittebene der Spindel 11 verläuft. Soweit es der Bauraum zulässt, kann der Zwischenwinkel dieser Ebenen ggf. auch kleiner als 90° gewählt sein.

Eine weitere Verringerung des Momentenarms wird erreicht, indem der Schwalbenschwanzkeil 81 innerhalb der Zylinderkontur des Spindelhalters 29 liegt, also in den zylindrischen Außenmantel des Spindelhalters 59 eingearbeitet ist. Diese Maßnahme vereinfacht darüber hinaus die Herstellung.

Die nicht näher dargestellte elektronische Steuerung der Unwuchtmessvorrichtung ist einschließlich der zugehörigen Bedienelemente in einer pultartigen Kammer 91 des Gehäuses 1 untergebracht. Für die Ermittlung der Unwucht nach Größe und Winkellage müssen der Steuerung Informationen sowohl über eine vorbestimmte Bezugsposition, d.h. eine Nullpunktdrehstellung der Spindel 11 relativ zu dem Spindelhalter 29 und damit relativ zu dem Gehäuse 1 als auch eine Information für die Größe der Drehwinkelabweichung der momentanen Drehstellung der Spindel 11 von dieser Bezugslage übermittelt werden. Hierzu ist an dem oberen, den Kupplungsadapter 13 tragenden Ende der Spindel ein Informationsträgerring 93 befestigt, der auf seiner kreiszylindrischen Außenfläche ringförmig einen Magnetbandabschnitt 95 trägt. Auf den Magnetbandabschnitt 95 sind in gleichbleibenden Winkelmaßabständen magnetische Winkelinformationen geschrieben, die von einer an dem Spindelhalter 29 lösbar befestigten Lesekopfanordnung 97 gelesen und der Steuerung zugeführt werden. Der Magnetbandabschnitt 95 trägt sowohl den Drehwinkel repräsentierende Informationen als auch die Information für die Nullpunktdrehstellung. Wenngleich beide Informationsarten in einer gemeinsamen Spur des Magnetbandabschnitts 95 aufgezeichnet sein können, so sind doch bevorzugt zwei nebeneinanderliegende Informationsspuren 99 (Figur 5) vorgesehen, von denen eine die Drehwinkelinformation und die andere die Nullpunkt-drehstellungsinformation enthält. Die Lesekopfanordnung 97 hat dementsprechend zwei den einzelnen Spuren 99 zugeordnete Leseköpfe.

Der Magnetbandabschnitt 95 ist in Umfangsrichtung geschlossen, wobei, wie Figur 5 zeigt, seine aneinanderstoßenden Enden in der Bandebene schräg geschnitten sind und einen unter einem spitzen Winkel zur Umfangsrichtung des Rings 93 verlaufenden Schrägschnittstoß 101 bilden. Die magnetischen Informationen werden nach dem Aufkleben des Magnetbandabschnitts 95 auf den Informationsträgerring 93 geschrieben. Dies hat den Vorteil, dass trotz des Schrägschnittstoßes 101 auch in diesem Bereich Magnetinformationen aufgezeichnet werden können. Der Schrägschnittstoß 101 verkürzt allenfalls die axiale Höhe der für die Aufzeichnung zur Verfügung stehenden Spur.

Auf der von oben her zugänglichen Fläche des Informationsträgerrings 93 sind optische Winkelgradmarkierungen, beispielsweise in Form radialer Striche 103 angebracht, die es dem Benutzer ermöglichen, die Spindel manuell relativ zur Bezugslage auszurichten.

Der in den Kupplungsadapter 13 eingesetzte Werkzeughalter 17 wird im Betrieb von der Zange 21 fixiert. Zur Betätigung der Zange 21 ist die Spindel 11 an ihrem unteren Ende durch einen Deckel 105 (Figur 1) verschlossen und bildet einen Druckluftzylinder, in welchem ein Druckluftkolben 107 für die Betätigung der Zange 21 abgedichtet verschiebbar ist. Die Druckluftzufuhr erfolgt über eine zentrische, in ständigem Dreheingriff sich befindende Druckluft-Drehkupplung 109 am Deckel 105. Die Kupplung 109 ist an einem Tragarm 111 gehalten, der seinerseits innerhalb des vom Antriebsriemen 47 umschlossenen Bereichs angeordnet und an dem Verbindungsjoch 35 und damit an dem Spindelhalter 29 befestigt ist. Auf diese Weise wird erreicht, dass der Antriebsriemen 47 gewechselt werden kann, ohne dass der Tragarm 111 demontiert werden muss. Da die Drehkupplung 109 an dem die Spindel 11 führenden Spindelhalter 29 befestigt ist, Radialbewegungen der Spindel 11 also begleitet, kann die Drehkupplung anders als im Fall von WO 00/45983 ständig in Eingriff sein. Zur weiteren Erläuterung eines geeigneten Ausführungsbeispiels der Zange 21 und deren Betätigungsorgane wird auf WO 00/45983 Bezug genommen.

Im Folgenden werden Varianten der vorstehend anhand der Fig. 1 bis 5 erläuterten Unwuchtmessvorrichtung beschrieben. Gleichwirkende Komponenten sind mit den Bezugszahlen der Fig. 1 bis 5 bezeichnet und zur Unterscheidung mit einem Buchstaben versehen. Zur Erläuterung des Aufbaus und der Wirkungsweise wird auf die Beschreibung der Fig. 1 bis 5 Bezug genommen. Es versteht sich, dass nicht dargestellte Komponenten dieser Figuren auch in den Varianten vorhanden sein können.

Fig. 6 zeigt eine Variante einer sowohl eine Drehwinkelinformation als auch eine Nullpunkt-Drehstellungsinformation liefernden Messanordnung. Am oberen Ende der Spindel ist wiederum ein Informationsträgerring 93a angeordnet, von dessen Umfang eine mit optischen Winkelinformationen versehene Ringscheibe 113 radial absteht. Die Winkelinformationen sind wiederum in zwei nicht näher dargestellten, radial nebeneinander angeordneten Spuren aufgezeichnet und werden von der optischen Lesekopfanordnung 97a im Durchlichtverfahren gelesen.

Es versteht sich, dass die optischen Informationen auch im Auflichtverfahren, d.h. reflektierend, gelesen werden können. Andererseits kann die Ringscheibe 113 anstelle optischer Informationen auch magnetische Informationen tragen, wie die Umfangsinformation im Fall der Fig. 5 auch optisch lesbar sein kann. Auch im Ausführungsbeispiel der Fig. 6 trägt der Informationsträgerring auf seiner von oben her zugänglichen Fläche optische Winkelgradmarkierungen 103a für die manuelle Ausrichtung der Spindel zur Bezugslage.

Fig. 7 zeigt eine Variante der zwei für sich vormontierte Baugruppen umfassenden Unwuchtmessvorrichtung. Auch in dieser Ausführungsform bilden der Elektromotor 5b und die Spindeleinheit 7b eine vormontierte Baugruppe und sind gleichachsig radial nebeneinander an ihren unteren Enden an dem Verbindungsjoch 35b angeflanscht. Für die Antriebsverbindung sind Riemenscheiben 41b, 45b vorgesehen, über die der Riemen 47b läuft. Diese Baugruppe ist mittels der Schwalbenschwanzverbindung 77b lösbar an der zweiten vormontierten Baugruppe, bestehend aus der Halteraufhängung 49b und der Sensoranordnung 61b indexiert befestigt. Die Schwalbenschwanzverbindung 77b hat wiederum eine Schwalbenschwanznut 79b und einen Schwalbenschwanzkeil 81b und kann entsprechend der in Verbindung mit den Figuren 1 bis 5 erläuterten Ausführungsform bajonettartig segmentiert und durch Klemmschrauben 83b fixiert sind.

Im Unterschied zu der vorstehend erläuterten Ausführungsform erfassen die zwischen Halterelementen 51b, 53b gehaltenen Kraftsensoren 61b Unwuchtkräfte, in Richtung des Abstands der Halterelemente 51b, 53b und sind hierzu einstückig mit einer U-förmigen Schenkelfeder 115 verbunden. Die Schenkelfeder 115 nimmt das Kragmoment der an dem Halterelement 53b befestigten Baugruppe aus Motor 5b und Spindeleinheit 7b auf. Auch hier ist zur Minderung des Momentenarms der Elektromotor 5b zur Schenkelfeder 115 hin angenähert eingebaut. Es versteht sich, dass auch in dieser Ausführungsform zwei Kraftsensoren in Richtung der Drehachse 9b gegeneinander versetzt angeordnet sein können, um Kippschwingungen erfassen zu können. Die Aufhängung der Kraftsensoren 61b zwischen den Halterelementen 51b, 53b kann der Variante der Figuren 1 bis 5 entsprechen.

## Patentansprüche

1. Vorrichtung zum Messen der Rotationsunwucht eines Gegenstands, insbesondere eines Maschinenelements oder eines Werkzeughalters, umfassend
- eine Spindeleinheit (7) mit einem Spindelhalter (29) und einer an dem Spindelhalter (29) um eine Drehachse (9) drehbar gelagerten, an einem ihrer beiden Enden eine Kupplung (13) zur Befestigung des Gegenstands (17) tragenden Spindel (11),
- eine den Spindelhalter (29) in einer vorbestimmten Messrichtung für Unwuchtkräfte auslenkbar führende Halteraufhängung (49) zur Befestigung der Spindeleinheit (7) an einer Maschinenbasis (1),
- einen die Spindel (11) rotierend antreibenden Elektromotor (5) und
- eine bei Rotation der Spindel (11) die Unwuchtkraft in der vorbestimmten Messrichtung messende Sensoranordnung (61),
- ein mit Informationen versehenes, an einem der axialen Enden der Spindel (11) fest angeordnetes Ringflächenelement (93) und eine Lesekopfanordnung (97) zum Lesen dieser Informationen,
**dadurch gekennzeichnet, dass**
die Lesekopfanordnung (97) mit dem Spindelhalter (29) verbunden ist und dass der Umfang des Ringflächenelements (93) mit einem magnetischen oder optischen Informationsträger in Form eines Bandabschnitts (95) sowohl für eine den Drehwinkel repräsentierende Information als auch für eine die Nullpunktdrehstellung repräsentierende Information versehen ist, wobei diese Informationen mittels der Lesekopfanordnung (97) lesbar sind.

2. Vorrichtung nach Anspruch 1, **dadurch gekennzeichnet, dass** das Ringflächenelement (93) an dem die Befestigungskupplung (13) für den Gegenstand (17) tragenden Ende der Spindel (11) befestigt ist.

3. Vorrichtung nach Anspruch 1 oder 2, **dadurch gekennzeichnet, dass** der Bandabschnitt (95) zwei Informationsspuren (99) nebeneinander aufweist, die die Lesekopfanordnung (97) voneinander gesondert abtastet.

4. Vorrichtung nach einem der Ansprüche 1 bis 3, **dadurch gekennzeichnet, dass** der Bandabschnitt (95) auf den Umfang des Ringflächenelements (93) aufgeklebt ist.

5. Vorrichtung nach Anspruch 4, **dadurch gekennzeichnet, dass** der Bandabschnitt ein Magnetbandabschnitt (95) ist, der mit aneinanderstoßenden Enden aufgeklebt ist.

6. Vorrichtung nach Anspruch 5, **dadurch gekennzeichnet, dass** die aneinanderstoßenden Enden des Magnetbandabschnitts (95) in der Bandebene schräg geschnitten sind, insbesondere wobei die den Drehwinkel oder/und die Nullpunktdrehstellung repräsentierenden Informationen auch den Bereich des Schrägschnittstoßes (101) des Magnetbandabschnitts (95) überlappen.

7. Vorrichtung nach Anspruch 4, **dadurch gekennzeichnet, dass** der Bandabschnitt ein Band mit optischen, im Auflicht lesbaren Informationen, insbesondere einer Strichskala ist.

8. Vorrichtung nach einem der Ansprüche 1 bis 7, **dadurch gekennzeichnet, dass** das Ringflächenelement (93) auf seiner der Spindel (11) abgewandten Fläche optische Winkelgradmarkierungen (103) aufweist.

9. Vorrichtung nach einem der Ansprüche 1 bis 8,
**dadurch gekennzeichnet, dass**
die Spindeleinheit (7) und der Elektromotor (5) zu einer ersten vormontierten Baugruppe und die Halteraufhängung (49) und die Sensoranordnung (61) zu einer zweiten vormontierten Baugruppe vereinigt sind und dass die beiden Baugruppen einander indexiert zugeordnete Verbindungselemente (77) für die betriebsmäßig lösbare Befestigung der Baugruppen aneinander tragen.

10. Vorrichtung nach Anspruch 9, **dadurch gekennzeichnet, dass** der Elektromotor (5) gegen die Drehachse (9) der Spindel (11) versetzt achsparallel neben der Spindel (11) angeordnet und an dem Spindelhalter (29) befestigt ist, insbesondere wobei der Elektromotor (5) so angeordnet ist, dass eine die Drehachsen des Elektromotors (5) und der Spindel (11) enthaltende Ebene gegen eine zur vorbestimmten Messrichtung senkrechte Axiallängsebene der Spindel (11) geneigt ist.

11. Vorrichtung nach Anspruch 9 oder 10, **dadurch gekennzeichnet, dass** der Elektromotor (5) und der Spindelhalter (29) auf derselben Seite eines gemeinsamen Verbindungsjochs (35) an diesem angeflanscht sind, insbesondere wobei das der Befestigungskupplung (13) ferne Ende der Spindel (11) mittels eines Endlos-Antriebsriemens (47) in Antriebsverbindung mit dem Elektromotor (5) steht.

12. Vorrichtung nach einem der Ansprüche 9 bis 11, **dadurch gekennzeichnet, dass** die Halteraufhängung (49) zwei in der vorbestimmten Messrichtung auslenkbar miteinander verbundene Halterelemente (51, 53) umfasst, von denen eines mit dem Spindelhalter (29) und das andere mit der Maschinenbasis (1) verbindbar ist und dass die Sensoranordnung (61) wenigstens einen zwischen den beiden Halterelementen (51, 53) gehaltenen Kraftsensor aufweist, insbesondere wobei die Halterelemente (51, 53) im Abstand voneinander angeordnet und von wenigstens einem in Abstandsrichtung steifen, quer dazu zumindest in Messrichtung flexiblen Abstandhalter (55), insbesondere mehreren solcher Abstandhalter (55) aneinander gehalten sind, oder die Halterelemente (51b, 53b) im Abstand voneinander angeordnet sind und von wenigstens einem in der die Messrichtung definierenden Abstandrichtung flexiblen, quer dazu im Wesentlichen steifen Abstandhalter (115), insbesondere einer U-förmigen Schenkelfeder, aneinander gehalten sind.

13. Vorrichtung nach Anspruch 12, **dadurch gekennzeichnet, dass** die Sensoranordnung (61) zwei in Richtung der Drehachse (9) der Spindel (11) im Abstand voneinander angeordnete, zwischen den beiden Halterelementen (51, 53) gehaltene Kraftsensoren aufweist, die bezogen auf eine zur Kraftmessrichtung senkrechte Axiallängsebene der Spindel (11) an den beiden Halterelementen (51, 53) gespiegelt abgestützt sind, und/oder jedem Kraftsensor (61) ein dem Kraftsensor (61) in der vorbestimmten Kraftmessrichtung vorspannendes Federelement (67) zugeordnet ist.

14. Vorrichtung nach einem der Ansprüche 9 bis 13, **dadurch gekennzeichnet, dass** die Verbindungselemente (77) der beiden Baugruppen zur Anlage aneinander bestimmte Fügeflächen (79, 81) aufweisen, die eine vorbestimmte Positionierung in der vorbestimmten Messrichtung und wenigstens einer dazu senkrechten Richtung ermöglichen.

15. Vorrichtung nach Anspruch 14, **dadurch gekennzeichnet, dass** die Verbindungselemente als Schwalbenschwanzführung (77) ausgebildet sind und Klemmmittel (83) zur Fixierung umfassen, insbesondere wobei der Schwalbenschwanzführung (77) ein Indexier-Endanschlag (89) in Verschieberichtung zugeordnet ist und/oder die Schwalbenschwanzführung (77) einander zugeordnete Schwalbenschwanz-Führungsflächen (79, 81) mit Bajonett-Aussparungen (85, 87) aufweist, die ein Zusammenstecken quer zur Verschieberichtung der Schwalbenschwanzführung (77) erlauben.

16. Vorrichtung nach Anspruch 14 oder 15, **dadurch gekennzeichnet, dass** die Verbindungselemente (77) an dem Spindelhalter (29) und der Halteraufhängung (49) vorgesehen sind.

## Claims

1. Device for measuring the rotational imbalance of an object, in particular a machine element or a tool holder, comprising
- a spindle unit (7) comprising a spindle holder (29) and a spindle (11) that is mounted on the spindle holder (29) so as to rotate about an axis of rotation (9) and that supports, at one of its two ends, a coupling (13) for fastening the object (17),
- a holder mounting (49) for fastening the spindle unit (7) to a machine base (1), which mounting deflectably guides the spindle holder (29) in a predetermined measurement direction for imbalance forces,
- an electric motor (5) that drives the spindle (11) in rotation, and
- a sensor arrangement (61) that measures the imbalance force in the predetermined measurement direction when the spindle (11) is rotated,
- an annular surface element (93) which is provided with information and is arranged so as to be stationary at one of the axial ends of the spindle (11), and a reading head arrangement (97) for reading said information,
**characterised in that** the reading head arrangement (97) is connected to the spindle holder (29), and **in that** the periphery of the annular surface element (93) is provided with a magnetic or optical information carrier in the form of a tape portion (95) both for a piece of information representing the angle of rotation and a piece of information representing a zero-point rotary position, it being possible for said information to be read by means of the reading head arrangement (97).

2. Device according to claim 1, **characterised in that** the annular surface element (93) is fastened to the end of the spindle (11) that supports the fastening coupling (13) for the object (17).

3. Device according to either claim 1 or claim 2, **characterised in that** the tape portion (95) has two information tracks (99) which are beside one another and which the reading head arrangement (97) scans separately from one another.

4. Device according to any of claims 1 to 3, **characterised in that** the tape portion (95) is adhered to the periphery of the annular surface element (93).

5. Device according to claim 4, **characterised in that** the tape portion is a magnetic tape portion (95) which is adhered so as to have mutually abutting ends.

6. Device according to claim 5, **characterised in that** the mutually abutting ends of the magnetic tape portion (95) are cut obliquely in the tape plane, in particular the information representing the angle of rotation and/or the zero-point rotary position also overlapping the region of the oblique-cut joint (101) of the magnetic tape portion (95).

7. Device according to claim 4, **characterised in that** the tape portion is a tape comprising optical information which can be read under incident light, in particular a graduated scale.

8. Device according to any of claims 1 to 7, **characterised in that** the annular surface element (93) has optical angular degree markings (103) on the surface of said element that faces away from the spindle (11).

9. Device according to any of claims 1 to 8, **characterised in that** the spindle unit (7) and the electric motor (5) are combined to form a first preassembled assembly, and the holder mounting (49) and the sensor arrangement (61) are combined to form a second preassembled assembly, and **in that** the two assemblies support connection elements (77) for operatively releasably fastening the assemblies to one another, which elements are associated with one another in an indexed manner.

10. Device according to claim 9, **characterised in that** the electric motor (5) is arranged so as to be offset with respect to the axis of rotation (9) of the spindle (11) and so as to be axially parallel beside the spindle (11), and is fastened to the spindle holder (29), the electric motor (5) in particular being arranged such that a plane containing the axes of rotation of the electric motor (5) and the spindle (11) is inclined with respect to an axial longitudinal plane of the spindle (11) that is perpendicular to the predetermined measurement direction.

11. Device according to either claim 9 or claim 10, **characterised in that** the electric motor (5) and the spindle holder (29) are flange-mounted on a common connection yoke (35) on the same side of said yoke, in particular the end of the spindle (11) that is remote from the fastening coupling (13) being in driving engagement with the electric motor (5) by means of a continuous drive belt (47).

12. Device according to any of claims 9 to 11, **characterised in that** the holder mounting (49) comprises two holder elements (51, 53) which are interconnected so as to be deflectable in the predetermined measurement direction, of which elements one can be connected to the spindle holder (29) and the other can be connected to the machine base (1), and **in that** the sensor arrangement (61) has at least one force sensor held between the two holder elements (51, 53), the holder elements (51, 53) in particular being arranged at a distance from one another and being held together by at least one spacer (55) that is rigid in the spacing direction and, transversely thereto, is flexible at least in the measurement direction, in particular being held by a plurality of spacers (55) of this kind, or the holder elements (51b, 53b) being arranged at a distance from one another, and being held by at least one spacer (115), in particular a U-shaped leg spring, that is flexible in the spacing direction defining the measurement direction and, transversely thereto, is substantially rigid.

13. Device according to claim 12, **characterised in that** the sensor arrangement (61) has two force sensors that are arranged at distance from one another in the direction of the axis of rotation (9) of the spindle (11) and that are held between the two holder elements (51, 53), which sensors are supported on the two holder elements (51, 53) mirror-symmetrically with respect to an axial longitudinal plane of the spindle (11) that is perpendicular to the force-measurement direction, and/or each force sensor (61) is associated with a spring element (67) that pretensions the force sensor (61) in the predetermined force-measurement direction.

14. Device according to any of claims 9 to 13, **characterised in that** the connection elements (77) of the two assemblies have joining surfaces (79, 81) which are intended to abut one another and which allow predetermined positioning in the predetermined measurement direction and at least one direction that is perpendicular thereto.

15. Device according to claim 14, **characterised in that** the connection elements are designed as a dovetail guide (77) and comprise clamping means (83) for fastening, an indexing stop (89) in particular being associated with the dovetail guide (77) in the direction of movement, and/or the dovetail guide (77) having dovetail guide surfaces (79, 81) that are associated with one another and comprise bayonet recesses (85, 87) which allow fitting together to take place transversely to the direction of movement of the dovetail guide (77).

16. Device according to either claim 14 or claim 15, **characterised in that** the connection elements (77) are provided on the spindle holder (29) and on the holder mounting (49).

## Revendications

1. Dispositif de mesure de balourd de rotation d'un objet, en particulier d'un élément de machine ou d'un support d'outil, comprenant
- une unité de broche (7) avec un support de broche (29) et une broche (11) logée de manière rotative sur le support de broche (29) autour d'un axe de rotation (9), portant sur une de ses deux extrémités un couplage (13) pour la fixation de l'objet (17),
- une suspension de support (49) menant, de manière à pouvoir être dévié, le support de broche (29) dans un sens de mesure prédéterminé pour des forces de balourd pour la fixation de l'unité de broche (7) sur une base de machine (1),
- un moteur électrique (5) entraînant en rotation la broche (11) et
- un agencement de capteur (61) mesurant la force de balourd dans le sens de mesure prédéterminé lors de la rotation de la broche (11),
- un élément de surface annulaire (93) agencé fixement sur une des extrémités axiales de la broche (11), pourvu d'informations et un agencement de tête de lecture (97) pour la lecture de ces informations,
**caractérisé en ce que**
l'agencement de tête de lecture (97) est relié au support de broche (29) et **en ce que** la périphérie de l'élément de surface annulaire (93) est pourvue d'un support d'informations magnétique ou optique sous la forme d'une section de bande (95) non seulement pour des informations représentant l'angle de rotation mais aussi pour des informations représentant la position de rotation de point zéro, dans lequel ces informations peuvent être lues au moyen de l'agencement de tête de lecture (97).

2. Dispositif selon la revendication 1, **caractérisé en ce que** l'élément de surface annulaire (93) est fixé sur l'extrémité portant le couplage de fixation (13) pour l'objet (17) de la broche (11).

3. Dispositif selon la revendication 1 ou 2, **caractérisé en ce que** la section de bande (95) présente deux voies d'informations (99) l'une à côté de l'autre que balaye l'agencement de tête de lecture (97) séparément l'une de l'autre.

4. Dispositif selon l'une des revendications 1 à 3, **caractérisé en ce que** la section de bande (95) est collée sur la périphérie de l'élément de surface annulaire (93).

5. Dispositif selon la revendication 4, **caractérisé en ce que** la section de bande est une section de bande magnétique (95) qui est collée avec des extrémités en aboutement.

6. Dispositif selon la revendication 5, **caractérisé en ce que** les extrémités en aboutement de la section de bande magnétique (95) sont coupées en oblique dans le plan de bande, en particulier dans lequel les informations représentant l'angle de rotation et/ou la position de rotation de point zéro recouvrent aussi la zone de l'aboutement de coupe oblique (101) de la section de bande magnétique (95).

7. Dispositif selon la revendication 4, **caractérisé en ce que** la section de bande est une bande avec des informations optiques, lisibles par réflexion, en particulier une échelle à traits.

8. Dispositif selon l'une des revendications 1 à 7, **caractérisé en ce que** l'élément de surface annulaire (93) présente sur sa surface éloignée de la broche (11) des marquages de degré angulaire optiques (103).

9. Dispositif selon l'une quelconque des revendications 1 à 8, **caractérisé en ce que** l'unité de broche (7) et le moteur électrique (5) sont réunis en un premier module prémonté et la suspension de support (49) et l'agencement de capteur (61) sont réunis en un second module prémonté et **en ce que** les deux modules portent l'un sur l'autre des éléments de liaison (77) associés de manière indexée l'un sur l'autre pour la fixation des modules détachable de façon opérationnelle.

10. Dispositif selon la revendication 9, **caractérisé en ce que** le moteur électrique (5) est agencé en déport par rapport à l'axe de rotation (9) de la broche (11) parallèlement à l'axe près de la broche (11) et est fixé sur le support de broche (29), en particulier dans lequel le moteur électrique (5) est agencé de sorte qu'un plan contenant les axes de rotation du moteur électrique (5) et de la broche (11) soit incliné contre un plan longitudinal axial perpendiculaire au sens de mesure prédéterminé de la broche (11).

11. Dispositif selon la revendication 9 ou 10, **caractérisé en ce que** le moteur électrique (5) et le support de broche (29) sont bridés du même côté d'un étrier de liaison commun (35) sur celui-ci, en particulier dans lequel l'extrémité éloignée du couplage de fixation (13) de la broche (11) est en liaison d'entraînement avec le moteur électrique (5) au moyen d'une courroie d'entraînement sans fin (47).

12. Dispositif selon l'une quelconque des revendications 9 à 11, **caractérisé en ce que** la suspension de support (49) comporte deux éléments de support (51, 53) reliés entre eux de manière à pouvoir être déviés dans le sens de mesure prédéterminé, dont un peut être raccordé au support de broche (29) et l'autre à la base de machine (1) et **en ce que** l'agencement de capteur (61) présente au moins un capteur de force maintenu entre les deux éléments de support (51, 53), en particulier dans lequel les éléments de support (51, 53) sont agencés à distance les uns des autres et sont maintenus les uns sur les autres par au moins un élément d'écartement (55) rigide dans le sens d'écartement, flexible transversalement à celui-ci au moins dans le sens de mesure, en particulier plusieurs tels éléments d'écartement (55), ou les éléments de support (51b, 53b) sont agencés à distance l'un de l'autre et sont maintenus l'un contre l'autre par au moins un élément d'écartement (115) sensiblement rigide transversalement à celui-ci, flexible dans le sens d'écartement définissant le sens de mesure, en particulier un ressort à branches en forme de U.

13. Dispositif selon la revendication 12, **caractérisé en ce que** l'agencement de capteur (61) présente deux capteurs de force agencés en direction de l'axe de rotation (9) de la broche (11) à distance l'un de l'autre, maintenus entre les deux éléments de support (51, 53) qui sont en appui de manière réfléchie par rapport au plan longitudinal axial perpendiculaire au sens de mesure de force de la broche (11) sur les deux éléments de support (51, 53), et/ou à chaque capteur de force (61) est associé un élément de ressort (67) précontraignant le capteur de force (61) dans le sens de mesure de force prédéterminé.

14. Dispositif selon l'une quelconque des revendications 9 à 13, **caractérisé en ce que** les éléments de liaison (77) des deux modules présentent des surfaces de joint (79, 81) destinées à l'appui l'une contre l'autre qui permettent un positionnement prédéterminé dans le sens de mesure prédéterminé et au moins un sens perpendiculaire à celui-ci.

15. Dispositif selon la revendication 14, **caractérisé en ce que** les éléments de liaison sont réalisés comme un guidage en queue d'aronde (77) et comportent des moyens de serrage (83) pour la fixation, en particulier dans lequel au guidage en queue d'aronde (77) est associée une butée d'extrémité d'indexage (89) dans le sens de coulissement et/ou le guidage en queue d'aronde (77) présente des surfaces de guidage en queue d'aronde (79, 81) associées l'une à l'autre avec des évidements de baïonnette (85, 87) qui permettent un assemblage transversalement au sens de déplacement du guidage en queue d'aronde (77).

16. Dispositif selon la revendication 14 ou 15, **caractérisé en ce que** les éléments de liaison (77) sont prévus sur le support de broche (29) et la suspension de support (49).
